# EUROPEAN PATENT APPLICATION

(11) **EP 4 570 561 A1**
(43) Date of publication of application: **18.06.2025**
(21) Application number: 23216442.6
(22) Date of filing: 13.12.2023
(51) Int. Cl.: B60L 1/00, B60L 15/20

(54) **ACTIVE STRUCTURAL-ACOUSTICS CONTROL**

(71) Applicant: Hitachi Energy Ltd, 8050 Zürich (CH)
(72) Inventor: DANERYD, Anders, 723 49 Västerås (SE); SAHU, Kiran, 723 44 Västerås (SE); CHEN, Nan, 722 10 Västerås (SE)
(74) Representative: Vossius & Partner Patentanwälte Rechtsanwälte mbB

(57) **Abstract**

A system for operation of an electrical power supply system of a train car, comprising: at least one first sensor and/or at least one second sensor for measuring data related to acoustic pressure in an inner space of the train car; at least one third sensor for measuring data related an output of the electrical power supply system; a processor configured to: process the measured data from one or more of the at least one first sensor, from the at least one second sensor, and from the at last one third sensor, and adjust an operation point of the electrical power supply system based on the processed measured data so as to reduce the acoustic pressure in the inner space of the train car.

## Description

The present disclosure relates to a method and system for operation of an electrical power supply system of a train car. In particular, for reduction of noise in an inner space of a train car.

A train car has an electrical power supply for providing power to at least one train motor. Train motors are typically provided at or on at least one bogie of a train car. Since, the train motors run on a different voltage and/or frequency than the overhead line or live rail for supplying power to the train car, the electrical power supply system comprises at least one converter and at least one reactor associated with said at least one converter. The reactors, also referred to as line reactors, operate to filter out pulse-width modulation, PWM, switching harmonics originating from the train converter.

The train line reactors are strong noise and vibration sources creating an unpleasant noise environment in the passenger and staff compartments or any other compartments of the train car. The different compartments are also referred to as inner spaces of the train car herein.

Design degrees of freedom for low noise are scarce and accurate noise prediction is impeded by the many physics and manufacturing uncertainties, which need to be mapped and accurately quantified.

In detail, the above discussed noise may be generated by frequency harmonics and/or complex combinations of the frequency harmonics, which result from PWM switching of each individual converter.

That is, the reactor vibrations and other noise emission from the train structure frequently leads to a poor sound environment in the passenger and train staff compartments of the train car.

The root cause is an unfavorable interaction between multiple core mechanical resonances in the kHz range and the clusters of PWM harmonics in the same frequency domains. Understanding reactor and train structure vibrations to the extent, that low noise units can be obtained already during the early design stages, suffers from many manufacturing and physics uncertainties that need to be clarified and expressed by statistics quantities.

This combination of uncertain product characteristics and lack of space and materials for efficient passive solutions is currently unsolved.

The above problems are among those solved by the present disclosure. The present disclosure is defined by the appended claims.

According to an aspect of the disclosure, there is provided a system for operation of an electrical power supply system of a train car, comprising: at least one first sensor and/or at least one second sensor for measuring data related to acoustic pressure in an inner space of the train car; at least one third sensor for measuring data related an output of the electrical power supply system; a processor configured to: process the measured data from one or more of the at least one first sensor, from the at least one second sensor, and from the at last one third sensor, and adjust an operation point of the electrical power supply system based on the processed measured data so as to reduce the acoustic pressure in the inner space of the train car.

It is noted that the data related to acoustic pressure in an inner space of the train car may be data related to measured acoustic pressure, i.e. a noise measurements, or may be data related to the source of the acoustic pressure, i.e. vibrations of one or more structural elements acoustically coupled to the inner space of the train car.

In an embodiment of the present disclosure, the processor is configured to adjust the operation point based on a feedback processing of the measured data from the at least one first sensor and/or at least one second sensor.

In an embodiment of the present disclosure, the processor is configured to adjust the operation point based on a feedforward processing of the measured data from the at least one third sensor.

In an embodiment of the present disclosure, the processor is configured to adjust a set of switching frequencies of the electrical power supply system based on the processed measured data; wherein preferably the processor is configured to adjust a switching frequency of a respective one of at least one converter provided in the electrical power supply system based on the processed measured data.

In an embodiment of the present disclosure, the at least one first sensor is at least one acoustic pressure sensor, preferably a microphone provided in the inner space of the train car; and/or wherein the at least one second sensor is at least one vibration sensor, preferably provided on or close to at least one reactor corresponding to a train converter of the train car, and/or wherein the at least one third sensor is at least one current probe, preferably provided between at least one converter and a reactor of the power supply system.

In an embodiment of the present disclosure, the feedforward processing comprises a model of the switching frequency harmonics, preferably comprises a reactor inverse model and/or a train structure inverse model, which are iteratively updated based on the measured data form one or more of the first and/or second sensors.

According to an aspect of the disclosure, there is provided a method for operation of an electrical power supply for providing power to a train motor of a train car, comprising: measuring data related to acoustic pressure in an inner space of the train car with at least one first sensor and at least one second sensor; measuring data related to an output of the electrical power supply system with at least one third sensor; processing, by a processor, the measured data from the at least one first sensor, from the at least one second sensor, and from the at least one third sensor; and adjusting, by the controller, an operation point of the electrical power supply based on the processed measured data so as to reduce the acoustic pressure in the inner space of the train car.

In an embodiment of the present disclosure, adjusting of the operation point is based on a feedback processing of the measured data from the at least one first sensor and/or at least one second sensor.

In an embodiment of the present disclosure, adjusting of the operation point is based on a feedforward processing of the measured data from the at least one third sensor.

In an embodiment of the present disclosure, adjusting of the operation point comprises adjusting a set of switching frequencies of the electrical power supply system based on the processed measured data, and wherein preferably the processor is configured to adjust a switching frequency of a respective one of at least one converter provided in the electrical power supply system based on the processed measured data.

In an embodiment of the present disclosure, the at least one first sensor is at least one acoustic pressure sensor, preferably a microphone provided in the inner space of the train car; and/or wherein the at least one second sensor is at least one vibration sensor, preferably provided on or close to at least one reactor corresponding to a train converter of the train car, and/or wherein the at least one third sensor is at least one current probe, preferably provided between at least one converter and a reactor of the power supply system.

In an embodiment of the present disclosure, the feedforward processing comprises a model of the switching frequency harmonics, preferably comprises a reactor inverse model and/or a train structure inverse model, which are iteratively updated based on the measured data form one or more of the first and/or second sensors.

According to an aspect of the disclosure, there is provided a computer-implemented method comprising the steps according to of any one of the preceding aspects and embodiments.

According to an aspect of the disclosure, there is provided a computer program comprising instructions which, when the program is executed by a processor, cause the processor to carry out the method of the above aspect.

According to an aspect of the disclosure, there is provided a train car comprising a system according to any one of the preceding aspects and embodiments.

It is an aspect of the present disclosure to provide an active vibration control system. Said system comprises one or more of vibration sensors attached to cores of the reactor and/or close to bogie attachment points, microphones mounted in strategic locations in an inner space of the train car, a current probe at each converter and further comprises a controller configured to determine an optimal train converter, TC, switching frequency for each converter based on the sensor measurements, and a communication solution for transferring the optimal TC switching frequency to the TC controls.

It is a further aspect of the present disclosure, to use the reactors as actuators. That is, for an individual reactor the on-line adaptation of PWM harmonics may bring about a cancellation of the complex structural-acoustics contributions to noise, or for a pair of reactors mounted to the same bogie to together bring about said cancellation.

Other aspects, features, and advantages will be apparent from the summary above, as well as from the description that follows, including the figures and the claims.

### Brief Description of the Drawings

The disclosure will be further described with reference to the figures. Therein,
- Fig. 1: shows a schematic arrangement of the reactors according to an embodiment of the present disclosure;
- Fig. 2: shows a schematic arrangement of the relevant components of an electric power supply according to an embodiment of the present disclosure;
- Fig. 3: shows active solutions for noise and vibration control according to an embodiment of the prior art.
- Fig. 4: shows a hybrid active solution for noise and vibration control according to an embodiment of the prior art.
- Fig. 5: shows a flow chart of a method according to an embodiment of the present disclosure;
- Fig. 6: shows details of a feed forward control method according to an embodiment of the present disclosure;
- Fig. 7: shows active solutions for noise and vibration control according to a first embodiment of the present disclosure; and
- Fig. 8: shows active solutions for noise and vibration control according to a second embodiment of the present disclosure.

### Detailed Description

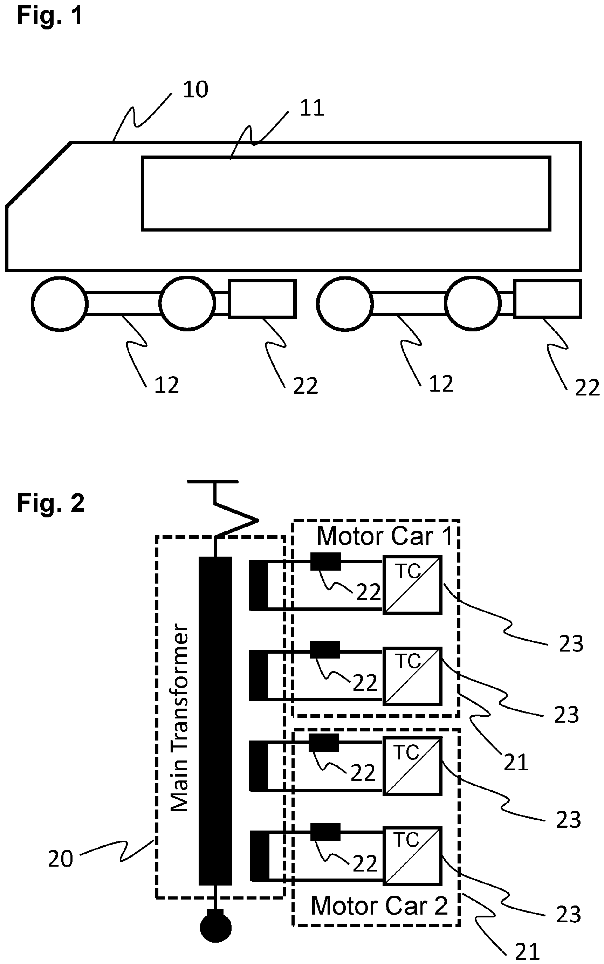

Fig. 1 shows a schematic arrangement of the reactors according to an embodiment of the present disclosure. While the specific design of train cars may vary significantly, for the present disclosure it is only relevant that a train car 10 has an electrical power supply system, which comprises one or more train converters.

A train car 10 according to embodiments of the present disclosure has an inner space 11 defined in the train car structure, the inner space may have different designs. A passenger compartment, a toilet, a sleep cabin, a galley, or a restaurant are examples of an inner space 11. Under the train car 10 one or more bogies 12 are provided.

The electrical power supply system according to embodiments of the present disclosure is at least partly provided on one or more of said bogies 12. In particular, the reactors 22 of said electrical power supply system are preferably provided on the one or more bogies 12 of the train car 10.

Due to the discussed arrangement under the train structure noise and/or vibration of the reactors is at least partly transferred via respective reactor mounts to the structure of the train car 10. That is, the noise and/or vibrations are transferred either directly into the inner space 11 or indirectly via vibrations of the train car structure to the inner space 11.

Fig. 2 shows a schematic arrangement of the relevant components of an electric power supply according to an embodiment of the present disclosure. As discussed above, among other components, the electrical power supply system of a train car comprises at least one main transformer 20, at least one train converter 23, and at least one reactor 22; wherein each reactor 22 is associated with a respective train converter 23. In the shown embodiment, the power supply system is for two motors 21, for each motor two train converters 23 are provided, each with one reactor 22 associated thereto. However, the present disclosure is not limited to the exemplary arrangement and components of Fig. 2.

In an embodiment of the present disclosure, the motors may be provided on different bogies 12. That is, the first motor may be provided on a bogie at a front portion of the train car and the second motor may be provided on a bogie at a rear portion of the train car. The two associated reactors per bogie may be provided left and right on the bogie. However, the aforementioned arrangement is exemplary and not limiting the present disclosure.

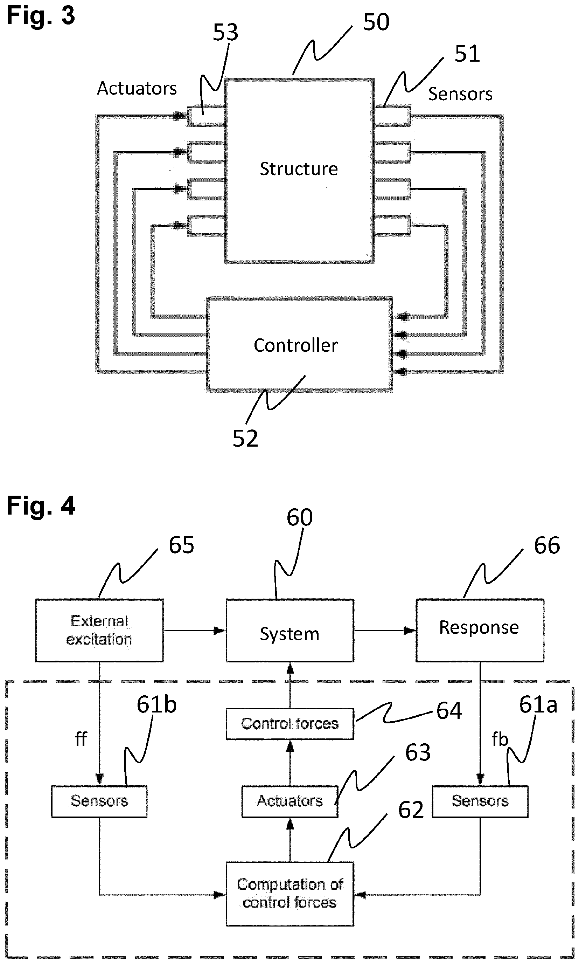

Fig. 3 shows active solutions for noise and vibration control according to an embodiment of the prior art. In detail, a signal corresponding to noise and/or vibration according to an embodiment of the present disclosure, is measured at a structure 50 by one or more sensors 51. The signal from the sensors is processed in a controller 52 and a correction signal is provided to one or more actuators 53. The actuators 53 act on the structure 50 to control, preferably reduce, the noise and/or vibration.

Fig. 4 shows a hybrid active solution for noise and vibration control according to an embodiment of the prior art. In detail, the control method may be described as external excitation 65 acting on a system 60 and the system 60 reacting with a response 66. The external excitation 65 and the response 66 are respectively measured by sensors 61a and 61b.

The measured signal of the response 66 is processed in a feedback loop and the measurement of the external excitation 65 is processed in a feedforward loop. Both processing may be performed in a controller 62 and/or in individual controllers 62.

The processing outputs one or more actuator set points, which are communicated to one or more actuators 63. The actuators 63 generate a control force 64. The control force 64 acts upon the system to control, preferably reduce, noise and/or vibration.

In context of noise and/or vibration control AVC, Active Vibration Control, usually means controlling actuator secondary forces in such a way that a vibration target as measured in the structure is achieved, cf. Fig. 3. Whereas ASAC, Active Structural-Acoustics Control, ASAC, usually means controlling actuator secondary forces and loudspeaker output power for the purpose of reducing air-borne noise exterior to the noise-emitting structure.

The present disclosure may be understood as a fusion of these basic concepts, providing robustness and opportunities to cancel also noise not primarily originating from the line reactor.

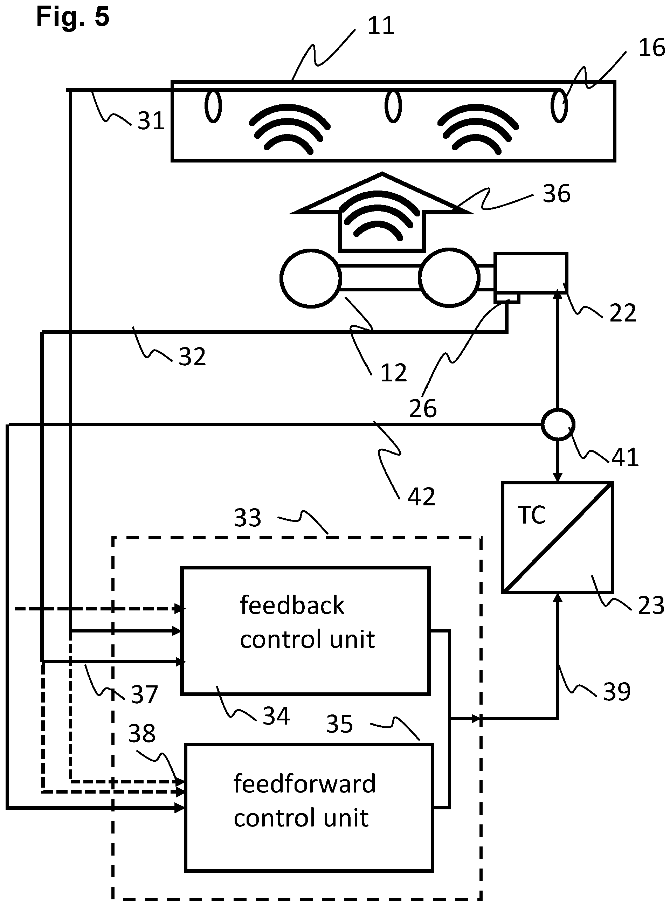

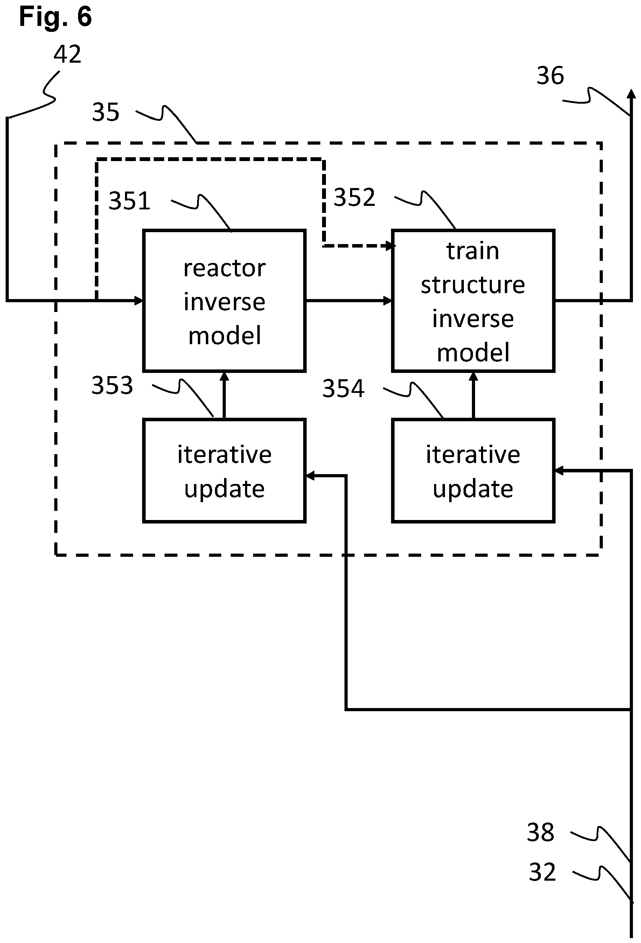

Fig. 5 shows a flow chart of a method according to an embodiment of the present disclosure; and Fig. 6 shows details of a feed forward control method according to an embodiment of the present disclosure.

In detail, one or more microphones 16 are provided in the inner space 11 of the train car 10. The microphones 16 are provided to measure noise, also referred to as acoustic pressure, in the inner space 11 of the train car 10, the noise is illustrated with the propagating wave symbols.

Furthermore, one or more vibration sensors 26, preferably based on an accelerometer, are provided close to or at the reactors 22 on the bogies 12 of the train car 10, preferably provided at the reactor mounts. Vibrations and/or noise generated by the reactors 22 may be transferred 36 into the inner space 11 of the train car 10.

Furthermore, one or more current probes 41 are provided between the converter 23 and the reactor 22. The current probe is configured to measure the frequency spectrum of the converter, preferably the PWM switching spectrum of the converter.

Preferably the current probe 41 is provided between the converter 23 and the reactor 22 of the electrical power supply system. Alternatively, the current probe 41 or an equivalent sensor may be provided within the converter 23.

The signal 31 from the microphones 16 is provided to the controller unit 33. The signal 32 from the vibration sensors 26 is provided to the controller unit 33. The signal 42 from the current probe 41 is provided to the controller unit 33. Optionally, the signal 31 may be digitized. Optionally, the signal 32 may be digitized. Optionally, the signal 42 may be digitized.

The microphones 16 are configured to measure the acoustic pressure in the inner space 11 of the train car 10. That is, they directly measure the noise originating from the reactors 22, however, they may also measure other noise components. The other noise components may be directly or indirectly linked to the operation of the electrical power supply system, the other noise components may also be linked to other sources in, on, or outside the train car 10.

The applicants have realized, that in the preferred feedback control method, the number and positions of the error sensors, i.e., microphones 16, are instrumental for the system robustness. Thus, the microphones 16 are provided such that a robust feedback control may be provided.

The signals 31, 32, and 42 from the various sensors, i.e., the microphones 16, the vibration sensors 26, and the current probes 42 are provided to the controller unit 33. The signals may be transmitted to controller unit 33 via suitable communication means. The communication means may be one or more wireless connection and/or one or more wired connection.

It is noted that the dashed signal lines indicate optional signals of preferred embodiments as will be discussed below.

The controller unit 33 is configured to determine a control signal 39 for controlling the set point of one or more train converter 23. The controller unit 33 preferably comprises a feedback control unit 34 and/or feedforward control unit 35.

Each of said control units 34 and 35 is configured to process one or more of the measured signals 31, 32, and/or 42. The processing output of each control unit 34 and 35 may be combined into the output 39 of the controller unit 33.

In a first embodiment the feedback control unit 34 is configured to process the measured signal from the microphones 16, also referred to as first measured signal 31.

In a second embodiment the feedback control unit 34 is configured to process the measured signal from the microphones 16 and/or the vibration sensor 26, also referred to as first measured signal 31 and/or second measured signal 32.

In a third embodiment the feedback control unit 34 is configured to process the measured signal from the microphones 16, the vibration sensor 26, and the current probe 42, also referred to as first measured signal 31, second measured signal 32, and third measured signal.

Alternatively or additionally, the feedback control unit 34 may be configured to process any combination of the measured signals as discussed above.

In an embodiment the feedforward control unit 35 is configured to process the measured signal 42 from the current probes 41, also referred to as third measured signal 42.

Alternatively or additionally, the feedforward control unit 35 may be configured to process to process any combination of the measured signals as discussed above.

In an embodiment each control unit 34 and 35 is individually configured to output a control signal for setting an operation point of the power supply system. The control signal is transmitted to the power supply system via suitable communication means. The communication means may be one or more wireless connection and/or one or more wired connection.

Alternatively, the output of each control unit 34 and 35 may be further processed, preferably in the controller unit 33 and preferably combined into one control signal 39 for setting an operation point of the power supply system.

The operation point of the power supply system may comprise a set point of the train converter 23, preferably a set point for the switching frequency of the train converter 23. The set point is determined such that the train converter specifics remain essentially unchanged.

The applicants have realized that the switching frequency, i.e. the PWM carrier frequency, of a train converter 23 can be changed within a +/-10% range (e.g. +/- 180Hz for switching frequencies of 1800Hz) without adversely affecting the train converter specifics. Said range provides enough range for active control of the noise in the inner space 11 of the train car 10 by using the reactors as actuator.

That is, the controller unit 33 is configured to output the control signal 39 for controlling the switching frequency of one or more specific converter.

The feedback control unit 34 is configured to provide the control signal such that the converter frequency, preferably the switching frequency, is changed, therefore the reactor acoustic spectrum is changed, and the noise in the inner space is reduced. That is, also the noise not originating from the reactor is reduced or cancelled out by actively controlling the acoustic and/or vibrational output of the one or more reactors.

Additional and/or alternatively, the feedforward control unit is configured to provide the control signal such that the converter frequency, preferably the switching frequency, is changed, therefore the reactor acoustic spectrum is changed, and the noise in the inner space is reduced. That is, also the noise not originating from the reactor is reduced or cancelled out by actively controlling the acoustic and/or vibrational output of the one or more reactors.

In an embodiment the feedforward and feedback is combined in a hybrid fashion as will be detailed below.

Fig. 6 shows details of a feed forward control method according to an embodiment of the present disclosure. In detail, the feed forward control unit 35 comprises a reactor inverse model 351 for determining the reactor vibrational and/or acoustical response to a changed switching frequency.

Additionally or alternatively, the feed forward control unit 35 comprises a train structure inverse model 352 for determining the vibrational and acoustical response of the train structure to a changed switching frequency and/or a reactors response to said changed frequency.

The reactor inverse model 351 and/or the train structure inverse model 352 may be iteratively updated based on measurements from the one or more sensors, preferably based on a measurement signal 38 of the one or more microphones 16 and/or based on a measurement signal 32 of the one or more vibration sensors 26.

In an embodiment, the reactor inverse model 351 and/or the train structure inverse model 352 are configured to process the measured spectrum 42 from the current probe and are configured to model a vibration and/or noise response from the reactor and/or the train structure. The control signal 36 is determined based on the output of the reactor inverse model 351 and/or the train structure inverse model 352.

Magneto-vibroacoustics 3D models including the complete sequence PWM current harmonics to core noise may be used. The applicants have studied the available noise reducing space when varying the TC switching frequency and it was found that for a moderate change, up to 10dB change in core vibration levels can be achieved. The nominal switching frequency, here 1800Hz, can be changed at least 10% without the need for special TC precautions in terms of, e.g., losses.

One ramification of the concept would be exclusively abating reactor vibrations for the train operating conditions under which the pressure error microphones do not provide consistent inputs because of disturbances from other strong secondary noise sources, the active solution thus approaching that of a pure AVC logic.

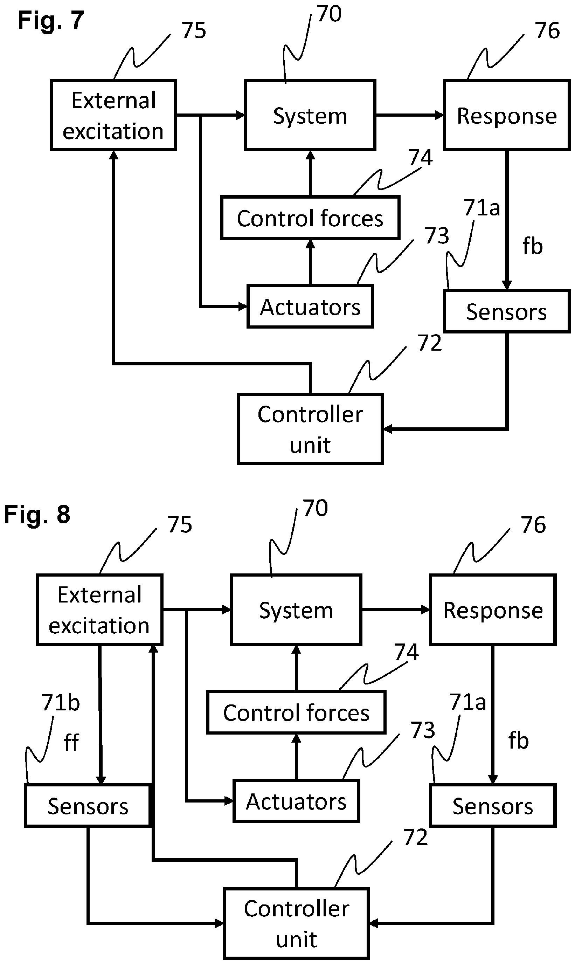

Returning now to the generic concept of Fig 4 to discuss the present disclosure, Fig. 7 shows active solutions for noise and vibration control according to a first embodiment of the present disclosure; and Fig. 8 shows active solutions for noise and vibration control according to a second embodiment of the present disclosure.

In the embodiment of Fig. 7, as discussed above, the controlled system 70 is the acoustic pressure spectrum in an inner space 11 of the train car 10. The response 76, i.e., the change of the acoustic pressure spectrum, is measured by suitable placed microphones 16 and/or vibration sensors 26, i.e. sensors 71a.

The signal from the microphones 16 and/or vibration sensors 26 is processed in a feedback loop. That is, a controller 72 is configured to determine a feedback control signal. According to an embodiment, the control signal is a set point for the one or more converter, which are equivalent to the external excitation 75. According to an embodiment, the actuators 73 of the control method are the reactors of the power supply system. That is, the control signal is not applied to actuators directly, cf. Fig. 4, but to the converter and the changed converter frequency changes the noise and/or vibration spectrum of the reactors and thus creates a control force 74. The actively controlled noise and/or vibration of the reactors then controls the system 70, the noise in the inner space 11 of the train car.

In other words, the method shown in Fig. 5 is a feedback method, based preferably on the signals from the microphones 16 and/or vibration sensors 26. Optionally, in addition or alternatively, the signal from the current probe 41 may be used for generating the feedback signal to the converter (not shown).

The actuators, i.e. reactors, generate a control force 74 in form of changes in vibration and/or acoustic emission. Said control force act on the system and causes an active noise reduction and/or cancellation.

In Fig. 8, in addition to the embodiment discussed for Fig. 7, the vibration of the actuators is measured by vibration sensors 71b.

The signal from the current probe 71b is processed in a feedforward loop. That is, a controller 72 is configured to determine a feedforward control signal. The control signal is suitable to control the converters 75. The actuators 73 are the reactors of the power supply system. As discussed above, according to an embodiment the reactors are actively controlled via changing of the converter switching frequency.

The control signal from the feedback and feedforward loop are suitably combined to control the switching frequency of the converters in order to control the reactors response.

Embodiments of the present disclosure also encompass: feedback control based on the signal from the microphones and/or the vibration sensors; feedforward control based on the signal from the current probe; and combinations of feedback and feedforward control based on any combination of sensors.

A preferred embodiment is the feedback control based on the microphone measurements combined with a feedforward control based on the vibration sensor measurements.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure.

Such persons would understand, however, that the present disclosure is not restricted to the illustrated example architectures or configurations but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof.

The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according to embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A system for operation of an electrical power supply system of a train car, comprising:
at least one first sensor and/or at least one second sensor for measuring data related to acoustic pressure in an inner space of the train car;
at least one third sensor for measuring data related an output of the electrical power supply system;
a processor configured to:
process the measured data from one or more of the at least one first sensor, from the at least one second sensor, and from the at last one third sensor, and
adjust an operation point of the electrical power supply system based on the processed measured data so as to reduce the acoustic pressure in the inner space of the train car.

2. System according to claim 1,
wherein the processor is configured to adjust the operation point based on a feedback processing of the measured data from the at least one first sensor and/or at least one second sensor.

3. System according to claim 1 or claim 2,
wherein the processor is configured to adjust the operation point based on a feedforward processing of the measured data from the at least one third sensor.

4. System according to any one of claims 1 to 3,
wherein the processor is configured to adjust a set of switching frequencies of the electrical power supply system based on the processed measured data;
wherein preferably the processor is configured to adjust a switching frequency of a respective one of at least one converter provided in the electrical power supply system based on the processed measured data.

5. System according to any one of claims 1 to 4,
wherein the at least one first sensor is at least one acoustic pressure sensor, preferably a microphone provided in the inner space of the train car; and/or
wherein the at least one second sensor is at least one vibration sensor, preferably provided on or close to at least one reactor corresponding to a train converter of the train car, and/or
wherein the at least one third sensor is at least one current probe, preferably provided between at least one converter and a reactor of the power supply system.

6. System according to any one of claims 3 to 5, wherein the feedforward processing comprises a model of the switching frequency harmonics, preferably comprises a reactor inverse model and/or a train structure inverse model, which are iteratively updated based on the measured data form one or more of the first and/or second sensors.

7. A method for operation of an electrical power supply for providing power to a train motor of a train car, comprising:
measuring data related to acoustic pressure in an inner space of the train car with at least one first sensor and at least one second sensor;
measuring data related to an output of the electrical power supply system with at least one third sensor;
processing, by a processor, the measured data from the at least one first sensor, from the at least one second sensor, and from the at least one third sensor; and
adjusting, by the controller, an operation point of the electrical power supply based on the processed measured data so as to reduce the acoustic pressure in the inner space of the train car.

8. Method according to claim 7,
wherein adjusting of the operation point is based on a feedback processing of the measured data from the at least one first sensor and/or at least one second sensor.

9. Method according to claim 7 or claim 8,
wherein adjusting of the operation point is based on a feedforward processing of the measured data from the at least one third sensor.

10. Method according to any one of claims 7 to 9,
wherein adjusting of the operation point comprises adjusting a set of switching frequencies of the electrical power supply system based on the processed measured data, and
wherein preferably the processor is configured to adjust a switching frequency of a respective one of at least one converter provided in the electrical power supply system based on the processed measured data.

11. Method according to any one of claims 7 to 10,
wherein the at least one first sensor is at least one acoustic pressure sensor, preferably a microphone provided in the inner space of the train car; and/or
wherein the at least one second sensor is at least one vibration sensor, preferably provided on or close to at least one reactor corresponding to a train converter of the train car, and/or
wherein the at least one third sensor is at least one current probe, preferably provided between at least one converter and a reactor of the power supply system.

12. Method according to any one of claims 7 to 11,
wherein the feedforward processing comprises a model of the switching frequency harmonics, preferably comprises a reactor inverse model and/or a train structure inverse model, which are iteratively updated based on the measured data form one or more of the first and/or second sensors.

13. A computer-implemented method comprising the steps according to of any one of claims 7 to 12.

14. A computer program comprising instructions which, when the program is executed by a processor, cause the processor to carry out the method of claim 13.

15. A train car comprising a system according to any one of claims 1 to 6.
